# EUROPEAN PATENT SPECIFICATION

(11) **EP 3 097 771 B1**
(45) Date of publication and mention of the grant of the patent: **17.03.2021**
(21) Application number: 15169870.1
(22) Date of filing: 29.05.2015
(51) Int. Cl.: B66C 23/00, A01G 23/08, A01G 23/00, B66C 23/42

(54) **FORESTRY MACHINE**
FORSTMASCHINE
ENGIN FORESTIER

(43) Date of publication of application: 30.11.2016
(73) Proprietor: Deere & Company, Moline, IL 61265 (US)
(72) Inventor: Magin, Ludwig, 67105 Schifferstadt (DE)
(74) Representative: John Deere GmbH & Co. KG

(56) References cited:
- WO-A1-2013/026951
- DE-U1-202009 005 446
- JP-A- 2009 040 600
- US-B1- 6 341 705

## Description

This invention relates to a forestry machine with an operator station for work and transport mode and a boom and to a method of transforming a boom (16) of a forestry machine (10) from a normal front working or operation position to a rear transport position.

It is known from FI 1943 U to have a forest harvester with a platform on which is located an operator station and a boom, rotating jointly about an at least substantially vertical axis. The boom extends forwardly in an operation mode as well as during transport.

RU 2465191 C2 discloses a crane vehicle with an operator station for transporting the crane and a horizontally swingable platform, on which two booms and an operator station for the crane operation are arranged. The cranes pivot on the platform.

WO 2013/026951 A1 discloses a forestry machine with a cab and a boom, which are able to rotate independent of each other.

By means of the teaching of claim 1 an alternative is provided to the known forestry machine, by the teachings of claim 13 a method for transforming a boom of a forestry machine is disclosed, and advantageous features according to the claims related to claim 1 further enhance said teaching.

By means of this teaching the operator station does not always need to rotate immediately and always when the boom rotates, which makes operation of the forestry machine more convenient. Furthermore, the operator station may be oriented in the forward driving direction, while the boom may be swung to the rear for transport, which will shorten the forestry machine and provide for a better road behavior. As the boom is journalled at a location not in front of the cab visibility for the driver will be unobstructed and the boom can be swung to the rear but would not rest above the operator station, since the overall height would not be allowed for transport on the road. In a forestry machine with a drive compartment comprising an engine and/or transmission a space is provided between said compartment and the operator station such that when the boom is swung from a working position in the front of the forestry machine to the rear into a transport position the harvester head may be located in this space. Thus the forestry machine becomes much shorter in its transport mode than ordinary forest machines.

The boom may end in a straight way and is connected pivotally about a horizontal axis beside or behind the operator station. The boom may terminate like a fork with a left and a right leg and a space interbetween. Said space is sufficient in size to assume the operator station as it is known from said FI 1943 U, but now and according to the invention the boom may pivot around the operator station.

While the boom could be journalled directly in or on a structure of the forestry machine it is technically more feasible to have a base section, like a platform or a sub-structure, which itself is rotatable on the structure by means of an axle and which on its upper side receives the boom pivotably. The understanding of the term axle should not be limited to sort of a fixed or rotating stub shaft, but encompasses all kinds of rotary support, including rings, saddles, bearings, etc.

Known base sections carrying the boom and the operator station for joint rotation are improved such, that now the operator station is horizontally rotatably received on them, which provides for a very compact design. The rotation axes of the base section and the operator station on it may be radially offset or congruent..

A support on the base section, on a front frame of the structure or on a rear frame thereof allows the boom and/or a harvester head to rest on it, such that the boom does not impact its pivot axle or that of the base section unduly. The support also avoids rocking movements of the boom when driving over uneven ground for transport. The support may be a platform, a hook, a recess or similar.

Where the operator station is not borne by the base section it can be carried by the structure, e.g. the front frame of it, and yet does not obstruct the movement of the base section with the boom, when the base section has an appropriate aperture to receive the axle of the operator station, like a curved slot or if the base section terminates before the axle carrying the operator station. This still allows the base section and the boom and the operator station to rotate about the same axis.

A control for rotating the operator station, the boom and the base section may comprise sensors, hydraulic valves, hydraulic motors, actuators, input device, etc. and may be controlled from the operator station. Said control may be of the manual individual type, of the intelligent boom type with boom tip control or a mix of both. Sensors can help in addition moving and changing the length and arrangement of the boom sections such that it can be moved into and out of the transport position. In the transport mode the head may be stored as described hereafter behind the operator station, but as well at the rear end of the forestry machine.

In a forestry machine with an articulated structure comprising a front and a rear frame pivoting with respect to each other the operator station may pivot with the front frame and the boom with the base section may assume a swim mode and pivot on the front frame in alignment with the rearframe in order not to extent sideways from the drive compartment on the rearframe. A relative movement between the front and the rear frame may happen about a substantially vertical axis and a substantially horizontal axis in the normal longitudinal axis of the forestry machine.

In order to have a wide exit from the operator station a door is provided at the front, rather than at a side where the legs of the fork type boom pivot. However, if the arms are journalled behind or in the rear area of the operator station, like in FI 1943 U, doors may also be provided at the side.

An operator station with rounded corners has a smaller overall dimension and legs of a fork type boom need not be too far apart to rotate around the operator station. The corners do not need to follow a true circle, but could also be slanted panes or walls, like a polygon. In case the operator station is wider at the top than at the base it is enough to have rounded corners in the top region.

If the drive compartment has a support, the boom can be lowered to it and the weight does not need to be borne by the bearing of the boom and/or by the axle of the base section. The compartment is far away from the boom pivoat axis and thus a long lever arm exists to support the boom.

When the pivot axis of the operator station can be pivoted versus the vertical direction, the operator station can always be kept in a level orientation, i.e. even when the forestry machine operates on a hill. The adjustment may be provided by using inclinometers and hydraulic and/or electro actuators.

In the following one embodiment of the invention is described in more detail and shown in the drawing, whereas it is shown in:
- Fig. 1: a forestry machine in side view from the left in a working or operation mode, whereas the front end of the forestry machine is shown left,
- Fig. 2: the forestry machine of figure 1 in a first step of conversion to a transport mode,
- Fig. 3: the forestry machine of figure 1 in a second step of conversion to a transport mode,
- Fig. 4: the forestry machine of figure 1 in the transport mode, and
- Fig. 5: part of the forestry machine of figure 1 with an operator station in a top view.

A forestry machine 10 shown in the drawing contains a structure 12, an operator station 14, a boom 16 and a drive compartment 18.

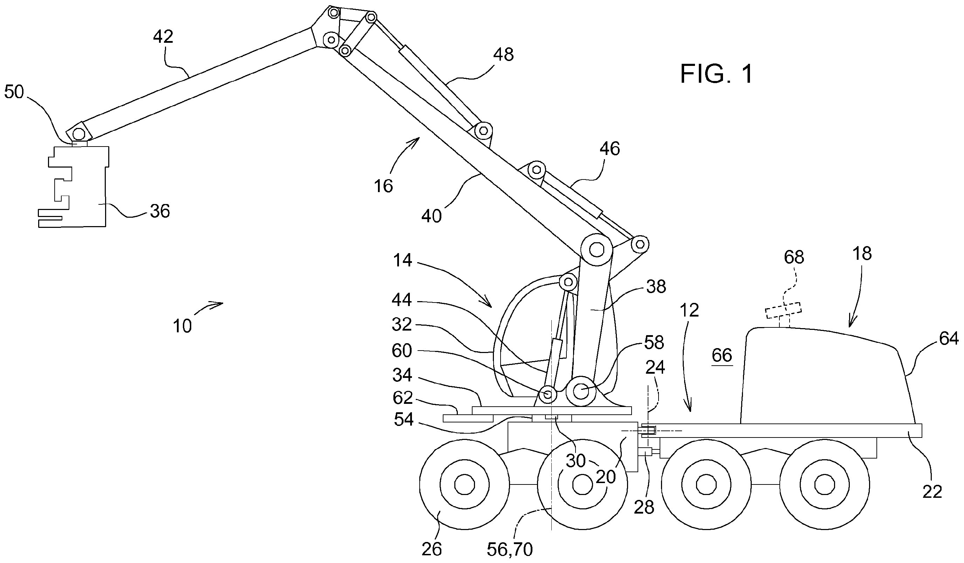

The drawing is of a very schematic nature, which is permissible, since most of the components of the forestry machine are known. When the description refers to normal condition or the like, this means the operating or working condition, as it is shown in figure 1.

The forestry machine 10 in the embodiment is formed as a forest harvester of the cut-to-length type, which however is one alternative only. The forestry machine 10 can be of any other kind with an operator station 14 and a boom 16, like a multi-tree harvester, multi-stem processor, forwarder or the like.

In this embodiment the structure 12 has a front frame 20 and a rear frame 22, which are connected to each other in a joint 24, to be moveable with respect to each other about a vertical and a horizontal, longitudinal axis, as this is common for today's kinds of forestry machines, like a JOHN DEERE forest harvester 1270. However, the structure 12 could be formed also as a rigid frame with steerable wheels instead of articulated frame parts 20, 22. The front frame 20 and the rear frame 22 are supported on the ground by means of wheels 26 hydraulically driven via vertically pivotable axle housings. Various alternatives are possible, like tracks instead of wheels or tracks around pairs of wheels, bogie axles, i.e. two wheels connected to a vertically pivotable transmission housing, independently suspended wheels or up to 5 axles, some of them being single axles some being bogie axles; nothing of all of this is critical for the invention. In the forestry machine 10 shown the front frame 20 is shorter than the rear frame 22 and both are pivoted about a vertical axis through the joint 24 by means of hydraulic actuators 28.

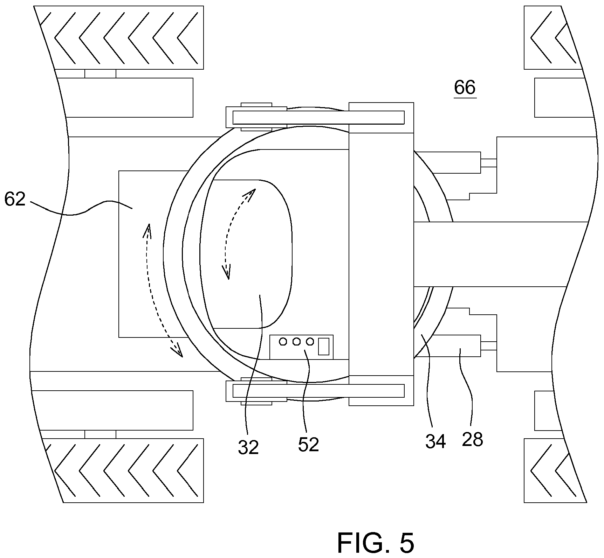

The operator station 14 is designed to occupy one operator and seen from the top - figure 5 - is of an almost round or rounded square cross section. In this embodiment the operator station 14 is formed as a cab, but it could be open as well. The operator station 14 is supported horizontally pivotable onor with an axle 30 with an axis 70, which normally is oriented perpendicular to the top surface of the front frame 20. In a more sophisticated embodiment the axis 70 can be adjusted to always be in a vertical orientation, if the forestry machine 10 works on a hill site. Due to the movement of the boom 16 described below a lateral movement of the operator station 14 into the vertical may create an interference with the boom 16 and thus the movement may be limited or it is provided a device to move the operator station 14 in the longitudinal direction of the forestry machine 10 out of a potential conflict zone with the boom 16. The operator station 14 has a front door 32 for entry and exit of the operator. The axle 30 may be more than just a stub shaft; it may contain a platform on the top of which is bolted the operator station 14 and it itself or the operator station 14 is provided with a rotary drive useful to rotate the operator station 14 about the upright axis 70, so that the operator may watch the movement of the boom 16 to the trees to be harvested. The operator station may rotate about 180 degrees or more or less. An electrohydraulic control 52 for all the movements of the operator station 14 and the boom 16 is provided which may move the operator station 14 synchronously with the boom 16 or with a certain delay; said control 52 is shown to be located in the operator station 14, where switches, display, keyboard, joystick etc. may be provided.

The boom 16 is connected at one end to a base section 34 and at the opposite end to a head 36 and is designed such, that it can rotate about an axis 56 vertical on the front frame 20 and move its end with the head 36 up and down and to and away from the front frame 20, as this is known. The base section 34 is not mandatory, but convenient, since the boom 16 could be received rotatably on the structure 12 or on the front frame 20 directly. The boom 16 comprises a base boom 38, pivotally connected to the base section 34, a middle boom 40 and a head boom 42, pivotally connected to each other, whereas the pivoting movement is controlled by hydraulic actuators 44, 46, 48 connecting them respectively. However, it is also possible to connect the base boom 38 and the middle boom 40 in a fixed way, although this is not so advantageous. The head boom 42 is formed telescopically and carries the head 36 via a so-called rotator 50. As it is shown in figure 1, the boom 16 with the head 36 extends quite far from the front of the forestry machine 10 when it is in the working mode. The movement of the boom 16 is controlled via the control 52. In this embodiment the base boom 38 is formed like a fork at its base end with one leg 38' extending on each side of the operator station 14 and a cross beam 38" connecting both legs 38' above the operator station 14 in a height, which never interferes with the operator station 14, even if the boom 16 is pivoted down and forward during operation. The cross beam 38" carries the middle boom 40. However, it is also possible to have a base boom 38 with a single leg only being located at one side of the operator station 14, as this is known from some forest harvesters on the market. The base boom 38 may also be located and journalled to the base section 34 behind the operator station 14, i.e. at the right side of it, when looking to figure 1. The kind of the boom 16 itself and of the base boom 38 are not critical for the invention; important is only the kind and location such, that the boom 16 can rotate passing the operator station 14 without interference.

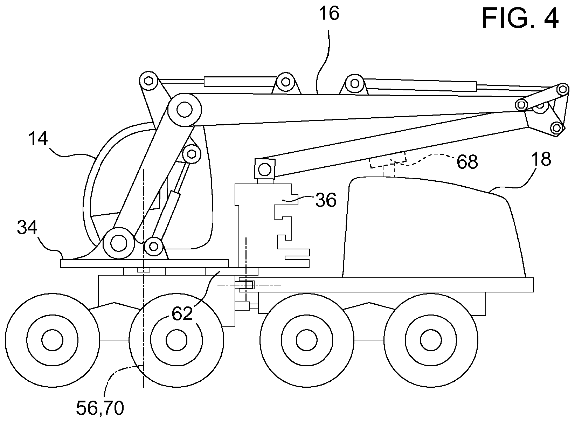

The base section 34 is formed as a structure, preferably welded, and rotatable about axle 54 with axis 56 congruent with the axis 70 of the axle 30, when the forestry machine 10 stands on even non-slanted ground. The axle 54 may be formed as co-axial rings connected to each other by thrust or roller bearings to resist higher moments, whereas one ring is connected to the front frame 20 and the other to the base section 34. The horizontal dimensions of the base section 34 are long and wide enough to receive the lower ends of the base boom 38 in bearings 58 and the lower ends of the actuators 44 in bearings 60. The base section 34 may have a support 62 extending on the side opposite of the compartment 18, when the boom 16 is in the operation mode as shown in figure 1. The support 62 may be formed as a platform, but also as a hook, a recess or similar, which is useful to support the head 36 in the transport position shown in figure 4. This feature is an advantage, but not essential for the invention. Instead of the support 62 may be arranged on the front frame 20 itself behind the operator station 14. The axle 30 of the operator station 14 may extend through an aperture in the base section 34, it may also be arranged on the upper side of it, provided it allows a rotation of the operator station 14 about upright axis 70 independent of the rotation of the boom 16. Independent means no physical connection such, that the rotation of one must lead to the rotation of the other. The rotational capabilities are separate; yet there is a control, which may provide a related movement between both - but this is a choice.

The head 36 may be of any known type, like a harvester head, a processing head, a multitree harvesting head, etc. as this is not important for the invention. The head 36 is located at the free end of the head boom 42 and can assume a substantially vertical orientation.

The compartment 18 is substantially covered by a big housing 64 inside of which is located an engine, hydraulic drive components, like a pump, valves, hoses, reservoir, cooling components etc. The compartment 18 covers a substantial portion of the rear frame 22 and leaves a space 66 to the assembly of operator station 14, base section 34 - if any - and boom 16. The space 66 is of a size sufficient to receive the head 36, when the boom 16 assumes its transport position as it is shown in figure 4. On the upper side of the housing 64 may be provided another or alternative support 68, whereas in the area of said support 68 the housing 64 may be reinforced or a non-shown structure is present and forms the support 68. The support 68 may be located as shown in the front area of the housing 64, in the rear area or somewhere between; it may also be on the rear frame 22 directly.

The before described structural elements are assembled and function as follows.

The base section 34 is located on the front frame 20 and can rotate in a substantially horizontal plane about axis 56. On top of the base section 34 is provided the boom 16, the base boom 38 of which is connected by bearings 58 to the base section 34 and pivoted in a vertical plane by hydraulic actuators 44 connected with one end to bearings 60. Middle boom 40 is connected to the base boom 38 at its normally rear end and pivoted vertically with respect to it by means of hydraulic actuator 46. Head boom 42 is likewise connected to the middle boom 40 and pivoted by means of hydraulic actuator 48. The head 36 is suspended from the front end of the head boom 42 by means of the rotator 50. All hydr. actuators 44, 46, 48 and the rotator 50 are controlled by means of electrohydraulic control 52. In a not shown embodiment the base boom 38 and the middle boom 40 are not pivotable with respect to each other but stiff. The base section 34 together with the boom 16 carried by it are rotated by means of a not shown hydraulic motor and can rotate 360° or endless. The support 62 is oriented normally at the front of the base section 34 as shown in figure 1. Similarly the operator station 14 is rotated with or about axle 30 by means of an own hydraulic motor, electro motor, rope, or similar. The rotation of the operator station 14 and of the base section 34 happen in a controlled manner, which may be related to each other, synchronized or completely independent. Especially if the operator station 14 is put on top of the base section 34 and if the operator station 14 shall not follow the rotation of the boom 16 immediately, but after e.g. 20 degrees only, the control of the operator station rotation may be such, that the operator station 14 is rotated counter to the boom 16 in this 20 degree range to keep its orientation.

Via axle 30 the operator station 14 is connected to the base section 34 or through an aperture in the base section 34 to the front frame 20. Preferably axles 30 and 54 have coincidental axes 56, 70, but this is not necessary. The axes 56, 70 of axles 30 and 54 may also be distant to each other and parallel. It is important only, that the operator station 14 and the boom 16 are able to rotate with or about their axles 30, 54 independently. Depending on the shape and connection place of the base boom 38 - fork type, sideward location or rearward location - the operator station 14 rotates between two legs 38' and under cross beam 38", beside one leg 38' or before one leg 38'. If the operator station 14 is journalled directly on the front frame 20 the base section 34 needs to have an aperture for the axle 30, so that the base section 34 can rotate without obstruction. The aperture may be in the form of a slot curved concentric to the axis 56.

Figure 1 shows the working position of the boom 16, in which it reaches to the front and is watched by the operator in the operator station 14. The boom 16 is pivoted up and down, whereas the legs 38' pass the sides of the operator station 14, which is accessible from the front through door 32. The support 62 is directed to the front.

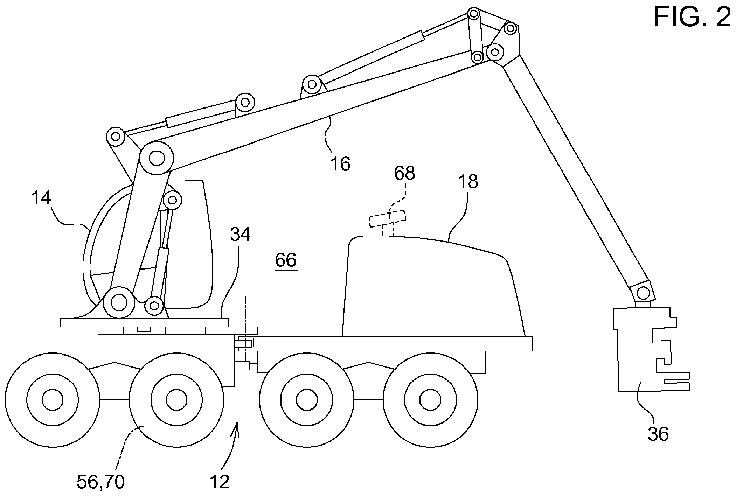

Figures 2 to 4 illustrate how the boom 16 is brought from the normal front working or operation position to a rear transport position. According to figure 2 the base section 34 with the boom 16 is swung about axis 56 to the rear, whereas the operator station 14 remains in its forward oriented position, which is possible, since each has its own rotation drive and axle 30, 54. As shown in figure 2 the base section 34 and the boom 16 are pivoted 180 degrees. In this transport mode the support 62 is moved rearwardly into the area of the space 66, i.e. between the operator station 14 and the compartment 18.

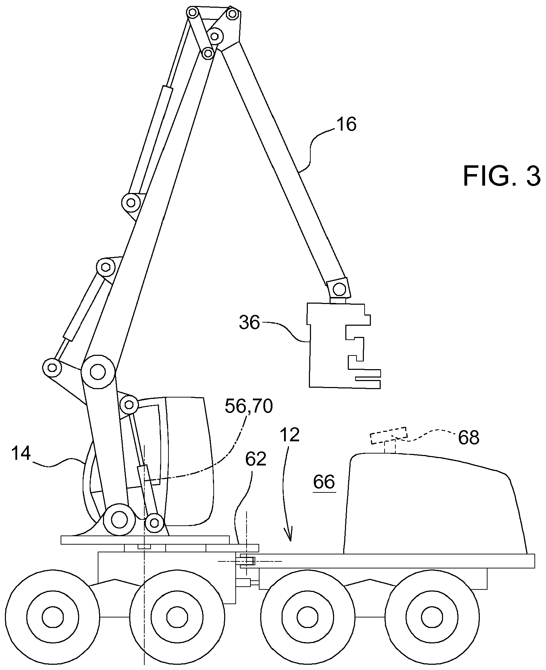

According to figure 3 the boom 16 is oriented vertically so that the head 36 is moved into the space 66, if need be above and along the top side of the compartment 18.

Once the head 36 reached the space 66 the boom 16 is lowered and pivoted rearwardly above and parallel to the compartment 18, such that the head 36 can be put onto the support 62. In this situation the base section 34, the boom 16 and the operator station 14 can follow the movement of the front frame 20 when driving over uneven terrain or in curves without any obstruction.

Alternatively and as shown in figure 4 the boom 16 - in particular the normally upper side of the head boom 42 - can rest against the support 68. In an embodiment, in which the support 68 is used, it has to be taken into account, that the front frame 20 on which the base section 34 and boom 16 are located and the rear frame 22 on which the compartment 18 with the support 68 are located pivot with respect to each other in a horizontal as well as in a vertical plane when driving off-road or in curves. Accordingly the boom 16 must be in swim mode during transport, so that its one end area can follow the movement of the front frame 20 and the other can move with and on the rear frame 22.

The support 62 as well as the support 68 is not really necessary, but advantageous to reduce the moments of the boom 16 about the axle 54.

As it can be seen from figure 4, the forestry machine 10 now is much shorter and the operator's view to the front is unobstructed. Such a short forestry machine 10 is easy to transport on trucks and under bridges. If the boom 16 rests on the support 62 or on the support 68 it does not rock up and down during transport over uneven ground or when breaking and accelerating. There is also no need any more to clamp or chain the head 36 to the front frame 20 during transport as this is known from existing machines. Moving the boom 16 to the operation or transport modes is easy to accomplish by means of the sophisticated electrohydraulic control 52, in which the actions of actuators 44, 46, 48, of rotator 50, of the extension and retraction actuator of the head boom 42 and the rotary drives of the operator station 14 and the base section 34 can be programmed; but it can be controlled manually as well. Due to the space 66 in front of the compartment 18 the operator station 14 and the base section 34 are located more on the front frame 20, which provides for a better weight balance of the forestry machine 10.

## Claims

1. Forestry machine (10) comprising an operator station (14) and a boom (16), whereas:
a) the operator station (14) is for operating the forestry machine in a work and a transport mode and is pivotable about an upright axis (70),
b) the boom (16) is pivotable about an upright axis (56) located at or behind a front edge of the operator station (14),
c) the operator station (14) and the boom (16) are able to pivot separate from each other,
d) a structure (12) with a front frame (20) and a rear frame (22) is provided, **characterized in that**
e) the structure (12) carries a drive compartment (18) and a space (66) is provided between the drive compartment (18) and the operator station (14) sufficient to receive a harvesting head (36) connected to the normal front end of the boom (16).

2. Forestry machine according to claim 1, whereas the boom (16) ends in a fork like base boom (38) providing a space between legs (38') of a size sufficient to rotate around the operator station (14).

3. Forestry machine according to claim 1 or 2, whereas a base section (34) is provided, which:
- is horizontally pivotable on a structure (12) by means of an axle (54),
- holds the boom (16) in a vertically pivotable manner.

4. Forestry machine according to claim 3, whereas the base section (34) holds the operator station (14) in a horizontally pivotable manner by means of an axle (30).

5. Forestry machine according to either of claims 1 to 4, whereas a support (62) to hold the boom (16) or a head (36) attached to it in the transport mode is provided on either the base section (34) or the front frame (20) or the rear frame (22).

6. Forestry machine according to claim 3, whereas the operator station (12) is received horizontally pivotable on the structure (12) by an axle (30) protruding through an aperture in the base section (34) or adjacent an edge of it.

7. Forestry machine according to one or more of the preceding claims, whereas a control (52) is provided to cause the rotation of the operator station (14) and of the base section (34) separate, but related to each other.

8. Forestry machine according to one or more of the preceding claims, whereas the front and rear frame (20, 22) are pivotally connected to each other in a joint (24) allowing a horizontal and a vertical tilt movement with respect to each other.

9. Forestry machine according to one or more of the preceding claims, whereas the operator station (14) has a door (32) opening to the front of the forestry machine.

10. Forestry machine according to one or more of the preceding claims, whereas the operator station (14) is rounded or slanted in corner areas exposed to the boom (16).

11. Forestry machine according to one or more of the preceding claims, whereas the drive compartment (18) or in its environment a support (68) for the boom (16) or the head (36) is provided.

12. Forestry machine according to one or more of the preceding claims, whereas the pivot axis (70) of the operator station (14) is adjustable with respect to the vertical direction.

13. Method of transforming a boom (16) of a forestry machine (10) from a normal front working or operation position to a rear transport position, whereas the boom (16) is carried by a base section (34), which is rotatable independent of an operator station (14), and carries a head (36) at an end opposite thereof and whereas a space (66) is provided between the operator station (14) and a drive compartment (18), the method comprising following steps:
a) the base section (34) with the boom (16) is swung to the rear,
b) the boom (16) is oriented vertically so that the head (36) is moved above the space (66),
c) once the head (36) reached the space (66) the boom (16) is lowered and pivoted rearwardly above the compartment (18),
d) the head (36) or the boom (16) are positioned on a support (62 or 68),
e) the boom (16) is put in a swim mode during transportation.

## Patentansprüche

1. Forstmaschine (10), eine Bedienerstation (14) und einen Ausleger (16) umfassend, wobei:
a) die Bedienerstation (14) dazu bestimmt ist, die Forstmaschine in einem Arbeits- und einem Transportmodus zu betreiben, und um eine aufrechte Achse (70) verschwenkbar ist,
b) der Ausleger (16) um eine aufrechte Achse (56), die sich an oder hinter einer Vorderkante der Bedienerstation (14) befindet, verschwenkbar ist,
c) die Bedienerstation (14) und der Ausleger (16) getrennt voneinander verschwenkbar sind,
d) eine Struktur (12) mit einem vorderen Rahmen (20) und einem hinteren Rahmen (22) vorgesehen ist, **dadurch gekennzeichnet, dass**
e) die Struktur (12) eine Antriebskammer (18) trägt und ein Zwischenraum (66) zwischen der Antriebskammer (18) und der Bedienerstation (14) vorgesehen ist, der ausreicht, um einen Erntekopf (36) aufzunehmen, der mit dem normalen vorderen Ende des Auslegers (16) verbunden ist.

2. Forstmaschine nach Anspruch 1, wobei der Ausleger (16) in einem gabelförmigen Basisausleger (38) endet, der einen Zwischenraum zwischen Schenkeln (38') vorsieht, der ausreicht, um sich um die Bedienerstation (14) zu drehen.

3. Forstmaschine nach Anspruch 1 oder 2, wobei ein Basisabschnitt (34) vorgesehen ist, der:
- über eine Achse (54) auf einer Struktur (12) horizontal verschwenkbar ist,
- den Ausleger (16) vertikal verschwenkbar hält.

4. Forstmaschine nach Anspruch 3, wobei der Basisabschnitt (34) die Bedienerstation (14) über eine Achse (30) horizontal verschwenkbar hält.

5. Forstmaschine nach einem der Ansprüche 1 bis 4, wobei eine Stütze (62) entweder am Basisabschnitt (34) oder am vorderen Rahmen (20) oder am hinteren Rahmen (22) vorgesehen ist, um den Ausleger (16) oder einen daran befestigten Kopf (36) im Transportmodus zu halten.

6. Forstmaschine nach Anspruch 3, wobei die Bedienerstation (12) über eine Achse (30), die durch eine Öffnung im Basisabschnitt (34) oder an dessen Kante angrenzend vorsteht, auf der Struktur (12) horizontal verschwenkbar aufgenommen ist.

7. Forstmaschine nach einem oder mehreren der vorstehenden Ansprüche, wobei eine Steuerung (52) vorgesehen ist, um die Drehung der Bedienerstation (14) und der Basisstation (34) getrennt voneinander, aber in Bezug zueinander zu bewirken.

8. Forstmaschine nach einem oder mehreren der vorstehenden Ansprüche, wobei der vordere und hintere Rahmen (20, 22) in einem Gelenk (24) verschwenkbar miteinander verbunden sind, wodurch eine horizontale und eine vertikale Neigungsbewegung in Bezug zueinander zugelassen wird.

9. Forstmaschine nach einem oder mehreren der vorstehenden Ansprüche, wobei die Bedienerstation (14) eine Tür (32) aufweist, die sich zur Vorderseite der Forstmaschine hin öffnet.

10. Forstmaschine nach einem oder mehreren der vorstehenden Ansprüche, wobei die Bedienerstation (14) in Eckbereichen, die dem Ausleger (16) ausgesetzt sind, abgerundet oder abgeschrägt ist.

11. Forstmaschine nach einem oder mehreren der vorstehenden Ansprüche, wobei die Antriebskammer (18) oder in deren Umgebung ein Träger (68) für den Ausleger (16) oder den Kopf (36) vorgesehen ist.

12. Forstmaschine nach einem oder mehreren der vorstehenden Ansprüche, wobei die Schwenkachse (70) der Bedienerstation (14) in Bezug zur Vertikalrichtung einstellbar ist.

13. Verfahren zum Umwandeln eines Auslegers (16) einer Forstmaschine (10) von einer normalen vorderen Arbeits- oder Betriebsstellung in eine hintere Transportstellung, wobei der Ausleger (16) von einem Basisabschnitt (34) getragen wird, der unabhängig von einer Bedienerstation (14) drehbar ist, und einen Kopf (36) am davon entgegengesetzten Ende trägt und wobei ein Zwischenraum (66) zwischen der Bedienerstation (14) und der Antriebskammer (18) vorgesehen ist, wobei das Verfahren die folgenden Schritte umfasst:
a) der Basisabschnitt (34) mit dem Ausleger (16) wird nach hinten verschwenkt,
b) der Ausleger (16) wird vertikal ausgerichtet, sodass der Kopf (36) über den Zwischenraum (66) bewegt wird,
c) sobald der Kopf (36) den Zwischenraum (66) erreicht hat, wird der Ausleger (16) abgesenkt und nach hinten über die Kammer (18) verschwenkt,
d) der Kopf (36) oder der Ausleger (16) werden auf einem Träger (62 oder 68) angeordnet,
e) der Ausleger (16) wird während des Transports in einen Schwimmmodus versetzt.

## Revendications

1. Engin forestier (10) comprenant un poste de commande (14) et une flèche (16),
a) le poste de commande (14) étant destiné à faire fonctionner l'engin forestier en mode travail et transport et pouvant pivoter autour d'un axe vertical (70) ,
b) la flèche (16) pouvant pivoter autour d'un axe vertical (56) situé sur ou derrière un bord avant du poste de commande (14),
c) le poste de commande (14) et la flèche (16) pouvant pivoter séparément l'un de l'autre,
d) une structure (12) avec un cadre avant (20) et un cadre arrière (22) étant fournie, **caractérisé en ce que**
e) la structure (12) porte un compartiment d'entraînement (18) et un espace (66) est fourni entre le compartiment d'entraînement (18) et le poste de commande (14), suffisant pour recevoir une tête de récolte (36) reliée à l'extrémité avant normale de la flèche (16).

2. Engin forestier selon la revendication 1, la flèche (16) se terminant par une flèche de base (38) en forme de fourche, laissant un espace entre les jambes (38') d'une taille suffisante pour tourner autour du poste de commande (14).

3. Engin forestier selon la revendication 1 ou 2, une section de base (34) étant fournie, qui :
peut pivoter horizontalement sur une structure (12) au moyen d'un axe (54),
tient la flèche (16) d'une manière pouvant pivoter verticalement.

4. Engin forestier selon la revendication 3, la section de base (34) maintenant le poste de commande (14) d'une manière pouvant pivoter horizontalement au moyen d'un axe (30) .

5. Engin forestier selon l'une quelconque des revendications 1 à 4, un support (62) pour maintenir la flèche (16) ou une tête (36) qui y est fixée en mode de transport étant fournie sur la section de base (34), sur le cadre avant (20) ou sur le cadre arrière (22).

6. Engin forestier selon la revendication 3, le poste de commande (12) étant reçu de manière à pouvoir pivoter horizontalement sur la structure (12) par un axe (30) faisant saillie d'une ouverture dans la section de base (34) ou qui est adjacent à un bord de celle-ci.

7. Engin forestier selon une ou plusieurs des revendications précédentes, une commande (52) étant fournie pour provoquer la rotation du poste de commande (14) et de la section de base (34) séparément, mais en relation l'un avec l'autre.

8. Engin forestier selon une ou plusieurs des revendications précédentes, les cadres avant et arrière (20, 22) étant reliés de manière pivotante l'un à l'autre par une articulation (24) permettant un mouvement d'inclinaison horizontal et vertical l'un par rapport à l'autre.

9. Engin forestier selon une ou plusieurs des revendications précédentes, le poste de commande (14) ayant une porte (32) s'ouvrant vers l'avant de l'engin forestier.

10. Engin forestier selon une ou plusieurs des revendications précédentes, le poste de commande (14) étant arrondi ou incliné dans les zones de coin exposées à la flèche (16).

11. Engin forestier selon une ou plusieurs des revendications précédentes, le compartiment de conduite (18) ou dans son environnement un support (68) pour la flèche (16) ou la tête (36) étant fourni.

12. Engin forestier selon une ou plusieurs des revendications précédentes, l'axe de pivotement (70) du poste de commande (14) pouvant être réglé par rapport à la direction verticale.

13. Procédé de transformation d'une flèche (16) d'un engin forestier (10) d'une position de travail ou d'opération avant normale à une position de transport arrière, la flèche (16) étant portée par une section de base (34), qui peut tourner indépendamment d'un poste de commande (14), et portant une tête (36) au niveau d'une extrémité opposée à celle-ci et un espace (66) étant fourni entre le poste de commande (14) et un compartiment d'entraînement (18), le procédé comprenant les étapes suivantes :
a) la section de base (34) avec la flèche (16) est pivotée vers l'arrière,
b) la flèche (16) est orientée verticalement de sorte que la tête (36) soit déplacée au-dessus de l'espace (66),
c) une fois que la tête (36) a atteint l'espace (66), la flèche (16) est abaissée et pivotée vers l'arrière au-dessus du compartiment (18),
d) la tête (36) ou la flèche (16) sont positionnées sur un support (62 ou 68),
e) la flèche (16) est mise en mode lâche pendant le transport.
